(19) Europäisches Patentamt

European Patent Office

Office européen des brevets

(11) **EP 2 357 488 A1**

(12) **DEMANDE DE BREVET EUROPEEN**

(43) Date de publication:
**17.08.2011 Bulletin 2011/33**

(51) Int Cl.:
**G01S 7/292** (2006.01)

(21) Numéro de dépôt: **11152248.8**

(22) Date de dépôt: **26.01.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **12.02.2010  FR 1000586**

(71) Demandeur: **THALES**
**92200 Neuilly-sur-Seine (FR)**

(72) Inventeurs:
• **Desodt, Guy**
  **91300 Massy (FR)**
• **Meurisse, Aurélie**
  **75012 Paris (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(54) **Procédé pour réaliser l'intégration longue, multi échelle, de signaux reçus à des instants variables**

(57)  L'invention a pour objet un procédé pour réaliser simultanément une intégration temporelle des signaux reçus par un senseur, un radar par exemple, pour différentes durées d'intégration. Le procédé met en oeuvre une pluralité de modules intégrateurs, chaque module i réalisant l'intégration du signal reçu sur une durée d'intégration $T_i$ différente. La durée d'intégration du signal reçu est croissante d'un module donné au module suivant. Le signal étant reçu sous la forme de séquences d'échantillons successives, ou séquences d'entrée, chaque échantillon d'entrée étant caractérisé par une amplitude et des valeurs de paramètres cinématiques d'entrée, chaque module intégrateur est configuré de façon à délivrer un signal intégré se présentant sous la forme de séquences successives d'échantillon ou séquences de sortie. Chaque échantillon de sortie est caractérisé par des valeurs de paramètres cinématiques de sortie et par une amplitude qui est déterminée à partir de l'amplitude d'échantillons d'entrée reçus durant la durée d'intégration $T_i$. Les échantillons d'entrée pris en compte dans l'opération d'intégration sont déterminés pour chaque séquence d'entrée en fonction du modèle de trajectoire de cible correspondant aux valeurs des paramètres de sortie caractérisant l'échantillon considéré.

Fig. 3

EP 2 357 488 A1

**Description**

L'invention concerne le domaine général de la détection, de la détection radar notamment. Elle traite plus particulièrement des problèmes liés à la nécessité qui apparaît dans certaines circonstances de procéder à l'intégration des signaux reçus pour améliorer les capacités de détection du système considéré.

En ce qui concerne la surveillance radar, certains échos sont parfois trop faibles pour être détectés à coup sûr à chaque balayage de la zone de l'espace dans laquelle les objets à l'origine de ces échos évoluent.

Pour pallier ce problème une solution connue consiste à effectuer une intégration du signal reçu par le radar sur plusieurs balayages. Cependant la mise en oeuvre d'une telle solution nécessite de prendre des précautions pour effectuer l'intégration. En effet les cibles considérées peuvent s'être déplacées de façon significative d'un balayage donné au balayage suivant. En outre les radars de surveillance contemporains présentent généralement plusieurs modes de fonctionnement (veille, confirmation, poursuite) qui ont pour conséquence connue que les balayages sur une même cible, ou plus généralement, sur un même lieu se produisent à des intervalles variables, ce qui complexifie encore le suivi des cibles.

Le problème évoqué ici est un problème relativement nouveau dans son acuité. Par le passé, le problème ne présentait pas le même caractère de gravité car les radars devaient détecter moins loin des objets de plus grande réflectivité évoluant à des vitesses plus faibles. La détection d'un écho était alors réalisée à chaque balayage, et le pistage chaînait les détections pour en faire des pistes.

A ce jour, en revanche, les exigences de distances de surveillance ont augmenté et les réflectivités des objets surveillés ont diminué. Il est donc nécessaire sinon indispensable de mettre en place des solutions pour maintenir ou accroître la capacité de détection.

Une solution simple bien connue consiste à abaisser le seuil de détection de façon à détecter des échos de plus faible amplitude. Cette solution présente cependant l'inconvénient important d'accroitre la probabilité de fausse détection (i.e. de fausse alarme) du radar qui la met en oeuvre. Une autre solution connue consiste à abaisser le seuil de détection et à chaîner toutes les détections obtenues pour ne décider de l'existence réelle d'une piste qu'après avoir vérifié si l'énergie de la piste ainsi constituée est suffisante. Cependant, une telle solution nécessite d'accroître la puissance de calcul des calculateurs mis en oeuvre. En outre si l'on améliore la sensibilité, des pertes de détection dues à la présence d'un seuil de détection, certes plus faibles, sont encore enregistrées. De plus, la combinatoire d'association des détections élémentaires, pour former des pistes, peut s'avérer complexe à mettre en oeuvre.

Alternativement, des solutions sans seuil de détection préliminaire sont de nos jours proposées. Certaines de ces solutions sont des solutions particulières, valables sous certaines hypothèses. Ainsi certaines solutions sont limitées à des durées d'intégration relativement faibles, ou postulent que les signaux doivent être reçus à période fixe, ou que l'ordre du modèle de déplacement des objets est limité, le modèle considéré étant par exemple un modèle à vitesse constante.

D'autres solutions conduisent à l'utilisation de puissances de calcul élevées comme c'est par exemple le cas des solutions basées sur des techniques de filtrage particulaire. La mise en oeuvre de telles solutions fait surgir un risque de besoin excessif en puissance de calcul, le nombre de tests de détection à effectuer ayant tendance à devenir gigantesque.

En résumé, la mise en oeuvre de telles solutions se traduit par une insuffisance de la durée d'intégration, une augmentation du taux de fausses alarmes, des pertes, ou un besoin excessif en puissance de calcul.

Il y a donc nécessité de perfectionner les solutions existantes.

Selon la demanderesse, ce perfectionnement passe par la mise en oeuvre d'une intégration sélective, dont la profondeur (i.e. la durée) est variable, et "multi-échelle", qui permette d'assurer à la fois la détection des échos les plus faibles (grande durée d'intégration, décision après un temps long) et la détection précoce des échos les plus forts (faible durée d'intégration, rapidité de décision).

Un but de l'invention est donc de proposer une solution pour réaliser une telle intégration.

A cet effet l'invention consiste à réaliser une cascade d'intégrations, sur des profondeurs (i.e. des durées) d'intégration croissantes.

A cet effet l'invention a pour objet un procédé d'intégration de signaux radars, les signaux intégrés étant reçus par le radar sous forme de séquences temporelles d'échantillons successives. Le procédé selon l'invention met en oeuvre un ensemble de P modules intégrateurs qui réalise des intégrations sur des durées différentes. Chaque module intégrateur étant configuré de façon à ce que l'ensemble réalise simultanément des intégrations du signal reçu sur des durées croissantes. Selon l'invention, chaque module intégrateur i est configuré pour réaliser l'intégration, sur un intervalle de temps $T_i$, d'un signal représenté par des séquences m successives d'échantillons, fournies au module en des instants $t_m$, ou séquences d'entrée. Chaque échantillon d'une séquence d'entrée m est caractérisé par des valeurs de paramètres d'entrée, des paramètres de position ou des paramètres cinématiques, valeurs qui correspondent à un modèle (d'évolution) donné d'une cible radar, et par une amplitude qui correspond à l'énergie du signal fourni au module intégrateur pour le modèle d'évolution défini, à l'instant $t_m$, par les valeurs des paramètres d'entrée caractérisant cet échantillon. Selon l'invention chaque module intégrateur i produit un signal intégré formé de séquences n successives d'échantillons, ou séquences de sortie. Chaque échantillon d'une séquence de sortie n est caractérisé par des valeurs de paramètres cinématiques de sortie correspondant à un modèle donné (d'évolution) d'une cible radar, et par une amplitude dont la valeur est déterminée à partir de l'amplitude du signal d'entrée associée, pour chaque séquence d'entrée m, aux valeurs des paramètres d'entrée qui correspondent, pour l'instant $t_m$ considéré, au modèle (d'évolution) de cible radar défini par les valeurs des paramètres cinématiques de sortie qui caractérisent l'échantillon de sortie considéré. Les valeurs d'amplitude du signal d'entrée ainsi déterminées pour chaque séquence d'entrée étant sommées pour déterminer l'amplitude caractérisant l'échantillon de sortie considéré.

Selon une forme de mise en oeuvre particulière du procédé selon l'invention la somme effectuée est une somme pondérée, la valeur de la pondération appliquée étant fonction de l'instant $t_m$ considéré.

Selon une forme de mise en oeuvre particulière du procédé selon l'invention, chaque échantillon intégré est en outre caractérisé par un nombre indiquant le nombre de séquences d'entrée qui ont contribué à la détermination de son amplitude.

Selon une forme préférée de mise en oeuvre du procédé selon l'invention, l'amplitude du signal d'entrée utilisée pour calculer l'amplitude caractérisant l'échantillon de sortie considéré est déterminée pour chaque séquence d'entrée reçue pendant l'intervalle de temps $T_i$, à partir des amplitudes d'échantillons de cette séquence.

Selon une forme de mise en oeuvre préférée du procédé selon l'invention, chaque module intégrateur i met en oeuvre une pluralité d'intégrateurs élémentaires, chaque intégrateur élémentaire étant configuré pour déterminer l'amplitude caractérisant un échantillon donné de chaque séquence de sortie, cet échantillon étant en outre caractérisé par des valeurs données des paramètres cinématiques; le nombre d'intégrateurs élémentaires constituant le module intégrateur i considéré étant fonction du nombre de valeurs que peut prendre chaque paramètre caractérisant un échantillon d'une séquence de sortie.

Selon une alternative de mise en oeuvre du procédé selon l'invention, les P modules intégrateurs étant numérotés de 1 à P, chaque module i, de durée d'intégration $T_i$, produit des séquences de sortie avec une périodicité égale à $T_i$, la durée $T_i$ étant égale à $k_i T \cdot_{1-i}$, avec $k_i$ entier quelconque, positif et non nul.

Selon une autre alternative de mise en oeuvre du procédé selon l'invention, les P modules intégrateurs étant numérotés de 1 à P, un module intégrateur i a une durée d'intégration $T_i$ égale à $k_i T \cdot_{i-1}$, avec $k_i$ entier quelconque, positif et non nul, et comporte $Q_i$ ensembles de $N_i$ intégrateurs élémentaires, de durée d'intégration $T_i$, les séquences de sortie produites par un ensemble q d'intégrateurs élémentaires d'un module i étant produites de manière synchrone des séquences produites par le premier ensemble d'intégrateurs élémentaires du même module, avec un décalage temporel égal à $(q-1)T_i/Q_i$;

chaque module intégrateur i produisant ainsi des séquences de sortie avec une périodicité égale à $T_i/Q_i$

Selon une forme de mise en oeuvre préférée des deux alternatives précédentes $k_i$ est égal à 2 et la durée $T_i$ est égale à $2^{i-1}T_0$

Selon une forme de mise en oeuvre préférée du procédé selon l'invention, pour une séquence d'entrée m, les valeurs des paramètres d'entrée, qui correspondent, pour l'instant $t_m$ considéré, au modèle (d'évolution) de cible radar défini par les valeurs des paramètres cinématiques de sortie qui caractérisent l'échantillon de sortie considéré, sont sensiblement égales aux valeurs des paramètres d'entrée qui caractérisent un échantillon donné de cette séquence d'entrée, la valeur de l'amplitude du signal d'entrée utilisée, pour la séquence considérée, pour déterminer l'amplitude de l'échantillon de sortie, est la valeur de l'amplitude qui caractérisent cet échantillon.

Selon une forme de mise en oeuvre préférée du procédé selon l'invention, lorsque, pour une séquence d'entrée m, les valeurs des paramètres d'entrée, qui correspondent, pour l'instant $t_m$ considéré, au modèle (d'évolution) de cible radar défini par les valeurs des paramètres cinématiques de sortie qui caractérisent l'échantillon de sortie considéré, ne correspondent à aucun des échantillons de cette séquence d'entrée, la valeur de l'amplitude du signal d'entrée utilisée, pour la séquence d'entrée considérée, pour déterminer l'amplitude de l'échantillon de sortie considéré, est déterminée à partir des valeurs d'amplitude des échantillons caractérisés par des valeurs de paramètres d'entrée voisines de ces valeurs.

Selon une forme de mise en oeuvre préférée du procédé selon l'invention, la valeur de l'amplitude du signal d'entrée utilisée, pour la séquence d'entrée considérée, est déterminée par interpolation des valeurs d'amplitude des échantillons caractérisés par des valeurs de paramètres d'entrée voisines de ces valeurs.

Selon une alternative de mise en oeuvre particulière du procédé selon l'invention, tous les modules intégrateurs sont mis en oeuvre en parallèle, chaque module intégrateur i effectuant l'intégration des séquences de signal radar reçu disponibles pendant sa durée d'intégration $T_i$.

Selon une autre alternative de mise en oeuvre particulière du procédé selon l'invention, les modules intégrateurs sont mis en oeuvre en cascades, chaque module i effectuant l'intégration pendant une durée $T_i$ des séquences d'échantillons produites par le module intégrateur i-1.

L'invention a également pour objet un procédé de détection d'échos radar, pour traiter un signal radar se présentant sous la forme de séquences d'acquisition successives, qui comporte:

- une première étape d'intégration à durées d'intégration multiples durant laquelle les séquences d'échantillons de signal radar sont intégrées sur des durées croissantes conformément à différentes hypothèses de cinématiques de cibles, cette première étape produisant pour chaque durée d'intégration un signal se présentant sous la forme de séquences successives d'échantillons de signal intégré, ces séquences étant produites par mise en oeuvre du procédé d'intégration selon l'invention;

- une deuxième étape de détection, durant laquelle on identifie, pour chacune des séquences de sortie produite par chacun des modules intégrateurs, les échantillons dont la valeur d'amplitude dépasse un seuil de détection donné, déterminé pour une probabilité de fausse alarme donnée, le seuil étant fonction du nombre de séquences d'échantillons d'entrée à partir desquelles la séquence de sortie considérée a été produite;

- une troisième étape de mesure durant laquelle les échantillons composant les diverses séquences de sortie dont les valeurs d'amplitude ont dépassé le seuil de détection correspondant sont associés pour constituer des plots.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:

- les figures 1 et 2, les synoptiques de deux formes de mise en oeuvre du procédé selon l'invention;
- les figures 3 et 4, des illustrations générales du principe de fonctionnement d'un module intégrateur mis en oeuvre par le procédé selon l'invention;
- les figures 5 à 7, des illustrations détaillées du principe de fonctionnement d'un module intégrateur mis en oeuvre par le procédé selon l'invention;
- la figure 8, l'illustration du principe de fonctionnement d'un module de mesure pouvant être associé au procédé selon l'invention pour former des plots radars;
- la figure 9, une illustration générale du principe de fonctionnement d'une forme particulière de mise en oeuvre du procédé selon l'invention.

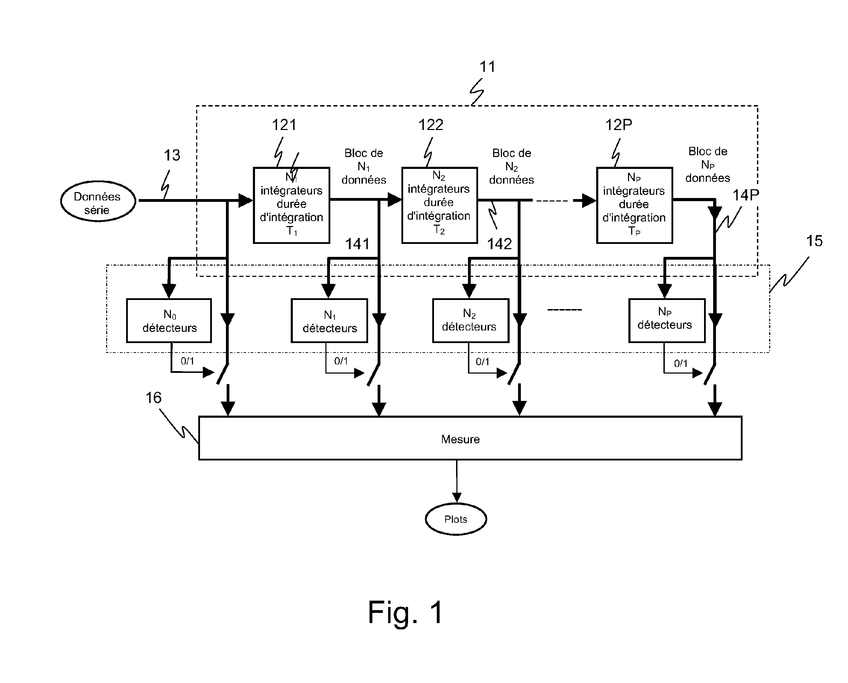

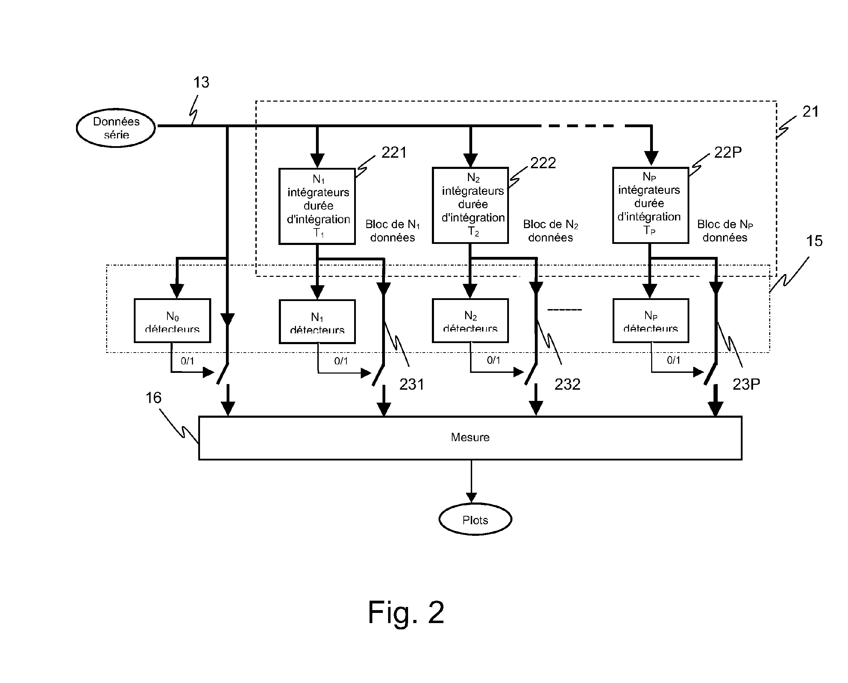

Comme l'illustrent les figures 1 et 2 le procédé selon l'invention 11 ou 21 comporte, un ensemble de modules intégrateurs 12i, ou 22i, chaque module i mettant lui-même en oeuvre un ensemble d'intégrateurs élémentaires.

Selon une première variante 11 du procédé selon l'invention présentée sur la figure 1, les modules intégrateurs sont agencés en série, sous forme d'une chaine. Chaque module 12i à l'intérieur de la chaine (1 < i ≤ P) reçoit le signal intégré 14i-1 produit par le module i-1 qui le précède, le premier module 121 de la chaine recevant quant à lui le signal 13 correspondant aux mesures directement réalisées par le radar, des valeurs d'amplitudes en fonction de la distance, du gisement et du site par exemple.

Chaque module intégrateur i comporte un nombre d'intégrateurs élémentaires donné $N_i$ opérant sur une durée d'intégration, ou profondeur d'intégration, donnée $T_i$. La durée d'intégration correspond à l'intervalle de temps pendant lequel le signal délivré au module d'intégration est pris en compte par l'opération d'intégration considérée. Selon un mode préféré de mise en oeuvre de l'invention, chaque module intégrateur i opère sur une durée d'intégration égale au double de celle sur laquelle opère l'intégrateur i-1, de sorte que si le procédé selon l'invention met en oeuvre une chaine de P modules d'intégration, et que le premier module 121 de la chaine opère sur une durée d'intégration égale à $T_1$, alors le ième module de la chaine opère sur une durée d'intégration égale à $2^{i-1} T_1$.

Alternativement, selon une seconde variante 21 du procédé selon l'invention présentée sur la figure 2, les modules intégrateurs sont agencés en parallèle. De manière similaire à la variante précédente, chaque module 22i (1≤i≤P) reçoit alors le signal 13 correspondant aux mesures directement réalisées par le radar, des valeurs d'amplitudes en fonction de la distance, du gisement et du site par exemple. Comme pour la variante précédente, chaque module intégrateur i comporte un nombre d'intégrateurs élémentaires donné $N_i$ opérant sur une durée d'intégration donnée $T_i$. Selon un mode préféré de mise en oeuvre de l'invention, chaque module intégrateur i opère sur une durée d'intégration $T_i$ différente, les durées d'intégration des différents modules étant définies de sorte que si le procédé selon l'invention met en oeuvre P modules d'intégration en parallèle, chaque module i (1 ≤ i ≤ P) opère sur une durée d'intégration $T_i$ différente égale à $2^{i-1}T_1$, où $T_1$ représente la profondeur d'intégration minimale choisie.

Selon l'invention et quelle que soit la variante de mise en oeuvre considérée la fonction d'intégration fonctionne sensiblement sur le même principe décrit dans les paragraphes qui suivent.

Comme cela a été dit précédemment, chaque module d'intégration 12i, ou 22i comporte un ensemble d'intégrateurs élémentaires. Selon l'invention, le signal intégré 14i ou 23i produit par chaque module i est délivré ici sous forme multidimensionnelle. Chaque dimension représente un paramètre caractérisant le mouvement des cibles recherchées, ce paramètre étant soit un paramètre statique accessible au travers des mesures directes réalisées par le radar, par exemple la distance, le gisement et le site, soit un paramètre dynamique obtenu par intégration de ces mesures directes sur la durée d'intégration du module i considéré.

Le nombre de paramètres dynamiques pris en compte est ici fonction des paramètres statiques disponibles ainsi que de la durée d'intégration et du domaine sur lequel le paramètre est pris en compte. Chaque paramètre, chaque direction, de cet espace, est par ailleurs échantillonnée avec un pas donné, de sorte que la dimension de l'espace des paramètres dans lequel le signal intégré 14i ou 23i est représenté, varie d'un module intégrateur à l'autre. Le pas avec lequel un paramètre est échantillonné dépend notamment de la durée d'intégration du module i considéré.

Ainsi chaque point de l'espace des paramètres est repéré par ses coordonnées constituées par les valeurs prises par les différents paramètres en ce point. Il correspond donc à un modèle de cinématique de cible radar particulier.

Selon l'invention, le signal intégré délivré par le module d'intégration i considéré, ou signal de sortie, est ainsi représenté par un ensemble donné de points de l'espace des paramètres considéré pour ce module, chaque point étant caractérisé par une amplitude résultant du processus d'intégration. Cette amplitude est fonction de l'énergie du signal d'entrée à intégrer, cette énergie étant mesurée pour un modèle de cinématique de cible donné.

En fonction de la durée d'intégration du module i considéré, le signal produit, 14i ou 23i, se présente sous forme de séquences d'échantillons, chaque échantillon correspondant à un point de l'espace des paramètres. Un échantillon de sortie est ainsi caractérisé par son amplitude et par les valeurs des paramètres cinématiques de sortie caractérisant un modèle (d'évolution) de cible pour l'intégrateur considéré.

Cette séquence est renouvelée en des intervalles de temps dépendant directement de la durée d'intégration. On obtient ainsi des images multidimensionnelles successives du signal intégré. Chaque image est associée à un instant, l'instant central ou l'instant final de l'intervalle de temps par exemple. Une image est représentée par un ensemble de pixels, dont la valeur correspond à la valeur du signal intégré pour le point de l'image considéré, chaque pixel étant associé à un point de l'espace des paramètres. La résolution de l'image est définie par le nombre de pixels disponibles, nombre qui est fonction du pas avec lequel est échantillonnée chaque dimension de l'espace de paramètres.

De manière analogue, le signal à intégrer fourni à chaque module i est lui aussi représenté dans un espace de paramètres cinématiques, qui sont soit des paramètres de position, soit des paramètres dynamiques. Il se présente sous la forme de séquences successives d'échantillons, chaque échantillon étant caractérisé par des valeurs des paramètres d'entrée qui correspondent à un modèle (d'évolution) de cible, et par l'amplitude du signal d'entrée mesurée pour ce modèle. Cependant, s'agissant du signal avant intégration, celui-ci est généralement représenté dans un espace défini par un nombre de paramètres cinématiques moindre, certaines hypothèses cinématiques n'étant pas accessibles à la mesure avant intégration. Cet espace forme un sous-espace de l'espace dans lequel le signal intégré produit est représenté. De même, en ce qui concerne les dimensions communes aux espaces d'entrée et de sortie, chaque paramètre dynamique est échantillonné avec un pas plus grand avant intégration. Par suite le signal d'entrée étant fourni au module d'intégration i par séquences successives, la fonction d'intégration prend en compte les séquences qui sont fournies au module i pendant la durée d'intégration $T_i$ considérée et ce, indépendamment de la fréquence à laquelle les séquences d'échantillons sont fournies au module.

Ainsi, si l'on se place dans le contexte d'un procédé mis en oeuvre pour réaliser l'intégration du signal reçu par un radar, le signal fourni à un module intégrateur i donné peut par exemple être représenté dans un espace à quatre dimensions, défini par un paramètre de distance d, un paramètre de gisement $\alpha$ et un paramètre de site h, ainsi que par un paramètre de vitesse radiale $v_r$; tandis que le signal intégré produit par le module considéré peut par exemple être représenté dans un espace à cinq dimensions, défini par un paramètre de distance d, un paramètre de gisement $\alpha$ et un paramètre de site h, ainsi que par un paramètre de vitesse radiale $v_r$ présentant un pas plus fin et un paramètre d'accélération radiale $\gamma_r$.

Pour produire le signal intégré, un module d'intégration i considère l'ensemble des modèles (d'évolution) de cible envisagés, c'est-à-dire l'ensemble des points de l'espace des paramètres de sortie du module. Il définit, en fonction des valeurs prises par ces paramètres pour le point de sortie considéré, valeurs qui forment les coordonnées du point, une hypothèse de trajectoire de cible s(t), à laquelle on associe pour chaque séquence m du signal d'entrée un point particulier de l'espace multidimensionnel de paramètres dans lequel le signal d'entrée est représenté, ce point étant défini par les valeurs particulières des paramètres d'entrée définissant l'espace dans lequel le signal fourni (signal d'entrée) est représenté à l'instant $t_m$ auquel la séquence considérée est fournie au module intégrateur. Par suite l'amplitude du signal fourni pour le point ainsi déterminé pour une séquence donnée est associée aux amplitudes du signal fourni au module pour les points déterminés de manière analogue pour les autres séquences. Par suite, selon le mode de mise en oeuvre considéré, l'amplitude du signal intégré pour le point considéré de l'espace des paramètres de sortie, autrement dit pour l'échantillon de signal de sortie correspondant au modèle d'évolution de cible considéré, peut alors être déterminer en effectuant une simple somme des amplitudes du signal d'entrée ainsi déterminées. Alternativement l'intégration peut consister en une somme pondérée.

Il est à noter que chaque point de l'espace des paramètres dans lequel le signal intégré produit est représenté correspondant à un modèle d'évolution de cible différent, c'est-à-dire à une hypothèse de cinématique de cible différente, un module d'intégration donné met en principe en oeuvre un nombre d'intégrateurs élémentaires égal au nombre de points, c'est-à-dire au nombre d'échantillons de sortie. De la sorte un module d'intégration se trouve défini par sa durée d'intégration et par le nombre d'intégrateurs élémentaires qu'il met en oeuvre.

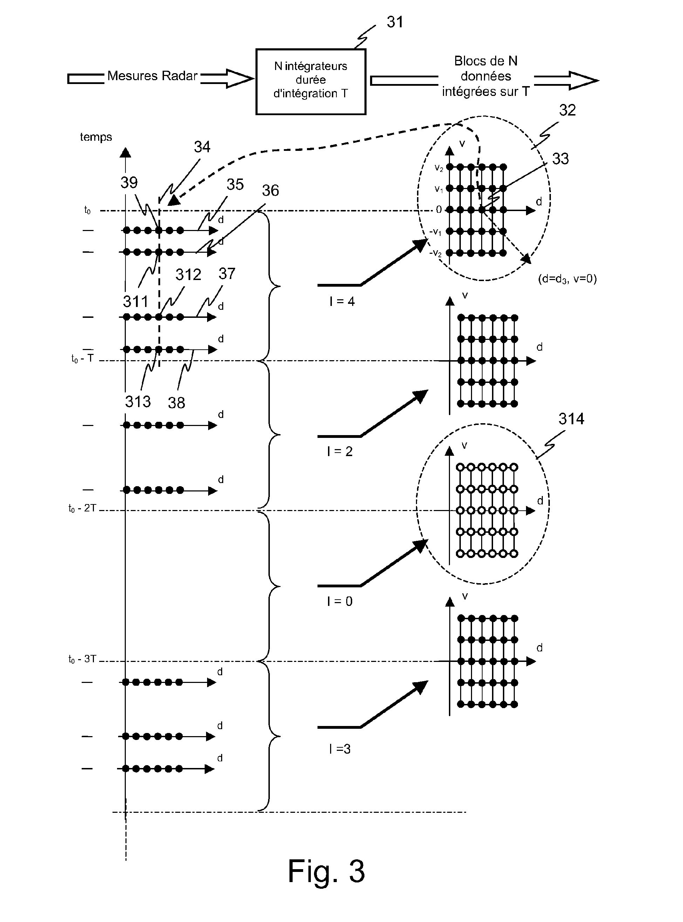

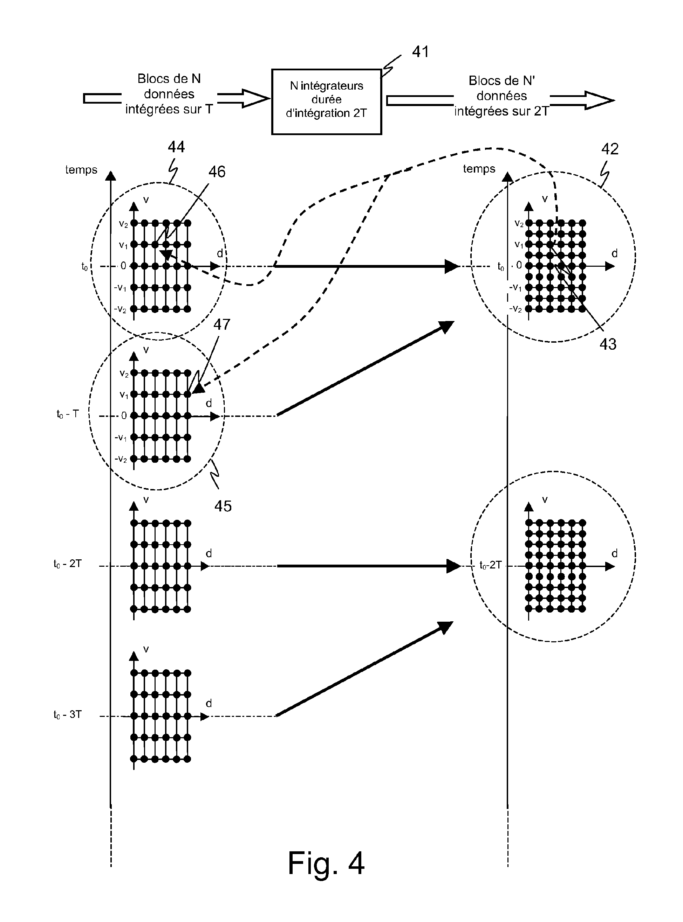

Les figures 3 et 4 illustrent le principe décrit précédemment sur des exemples de mise en oeuvre simples.

La figure 3 illustre le cas simple d'un intégrateur 31 réalisant l'intégration sur une durée T d'un signal monodimensionnel représenté par un paramètre statique, comme la distance d par exemple. Ce cas peut facilement être généralisé en considérant un intégrateur réalisant l'intégration d'un signal multidimensionnel représenté par des paramètres d'entrée statiques, comme la distance d, le gisement et le site par exemple. Cet intégrateur correspond en particulier à n'importe quel intégrateur 22i du mode de mise en oeuvre des intégrateurs en parallèle (figure 2) ou à l'intégrateur 121 du mode de mise en oeuvre des intégrateurs en série ou en cascade (figure 1).

La durée d'intégration est ici supposée suffisante pour que l'espace des paramètres dans lequel le signal intégré est représenté, ou espace des paramètres de sortie, fasse apparaître la dimension "vitesse radiale" (v), avec un pas d'échantillonnage permettant de distinguer cinq valeurs distinctes de vitesse.

Comme l'illustre la figure 3, l'intégration étant réalisée sur une durée T le module intégrateur prend en compte pour chaque instant d'intégration $t_0$, les séquences d'échantillons de signal qui lui sont fournies durant l'intervalle de temps T qui précède l'instant $t_0$. Chaque échantillon d'une séquence d'entrée m est caractérisé par des valeurs de paramètres d'entrée, des paramètres de position ici, et par une amplitude qui correspond à l'énergie du signal fourni au module intégrateur pour les valeurs des paramètres d'entrée caractérisant cet échantillon.

Le module intégrateur produit ainsi des séquences d'échantillons de signal intégré pour des instants successifs séparés d'un intervalle de temps de durée T. Chaque échantillon d'une séquence de sortie n étant caractérisé par des valeurs de paramètres cinématiques de sortie correspondant à un modèle donné (d'évolution) d'une cible radar, et par une amplitude dont la valeur est déterminée à partir du signal d'entrée et du modèle (d'évolution) de cible considéré.

Il est à noter que selon l'invention, comme l'illustre la figure 3, la fourniture de séquences d'échantillons de signal au module intégrateur n'est pas nécessairement cadencée de façon régulière ou synchrone du cadencement des séquences d'échantillons du signal intégré. Par conséquent, il peut exister des instants particuliers, l'instant $t_0$-2T par exemple sur la figure 3, pour lesquels aucune séquence n'est fournie au module pendant l'intervalle de temps T précédent ces instants. Dans une telle circonstance le signal de sortie intégré est alors nul.

Chaque échantillon constituant une séquence 32 du signal intégré par un intégrateur élémentaire, est obtenu comme expliqué précédemment, en déterminant pour chaque séquence 35 à 38 les valeurs des paramètres d'entrée qui correspondent pour la séquence d'entrée m considérée à la trajectoire associée au point considéré de l'espace des paramètres de sortie. Autrement dit, on détermine à partir de la trajectoire définie pour l'instant d'intégration considéré, l'instant $t_0$ par exemple, par les valeurs des paramètres de sortie, les valeurs des paramètres d'entrée correspondant pour l'instant $t_m$ pour lequel la séquence m est fournie au module intégrateur. Dans l'exemple de la figure 3 on a représenté le cas simple de la droite 34 qui correspond à la trajectoire définie par les valeurs des paramètres pour le point 33 de l'espace de paramètres de sortie, pour lequel la distance à $t_0$ est égale à $d_3$ et la vitesse radiale est nulle. Dans ce cas l'intégrateur élémentaire associé au point 33 considéré effectue la somme ou la somme pondérée des valeurs associées aux points 39 à 313. Par ce processus une séquence de signal intégré est produite après chaque intervalle de temps T, sachant qu'il apparaît parfois des séquences nulles 314.

La figure 4 illustre quant à elle le cas d'un intégrateur 41, réalisant l'intégration sur une durée 2T d'un signal multidimensionnel représenté ici par un paramètre statique, et un paramètre dynamique, la distance d et la vitesse radiale v par exemple. Ce module intégrateur i correspond à n'importe quel intégrateur 12i du mode de mise en oeuvre en série ou en cascade des modules intégrateurs par le procédé selon l'invention (figure 1).

L'intégration sur une durée égale à 2T est ici réalisée par le module i à partir des signaux intégrés par le module d'intégration précédent i-1 lequel réalise une intégration sur une durée égale à T. L'intégration est donc réalisée sur deux trames consécutives produites par le module i-1. Les paramètres d'entrée caractérisant les échantillons d'entrée fournis à l'intégrateur i, sont ici les paramètres de sortie caractérisant les échantillons intégrés produits par l'intégrateur i-1.

Dans l'exemple simple illustré par la figure 4, l'espace des paramètres du signal d'entrée est de dimension 2. Un point y est repéré par une valeur de distance d et de vitesse radiale v. L'espace des paramètres de sortie est quant à lui un espace à trois dimensions. Un point y est repéré par une valeur de distance d, de vitesse radiale v, et d'accélération radiale γ, la dimension accélération radiale γ n'étant pas représentée sur la figure pour des raisons de lisibilité.

Chaque échantillon 43 constituant une séquence 42 du signal intégré par un intégrateur élémentaire, est caractérisé par des valeurs données des paramètres de sortie correspondant à un modèle (d'évolution) de cible et par une amplitude déterminée comme expliqué précédemment, en considérant les valeurs des paramètres de sortie caractérisant un échantillon de sortie (i. e. un point de l'espace des paramètres de sortie) donné, pour l'instant d'intégration considéré, l'instant $t_0$ par exemple, et en déterminant pour chacune des deux séquences d'entrée 44 et 45, le point 46 ou 47 pour lesquels les valeurs des paramètres d'entrée correspondent pour l'instant de fourniture de la séquence d'entrée, $t_0$ pour la séquence 46 et $t_0$-T pour la séquence 47, à la trajectoire associée au point considéré 43 de l'espace des paramètres de sortie. Dans ce cas l'intégrateur élémentaire associé au point 43 considéré effectue la somme ou la somme pondérée des deux valeurs d'amplitude associées aux points 46 et 47. Par ce processus une séquence de signal intégré est produite après chaque intervalle de temps 2T.

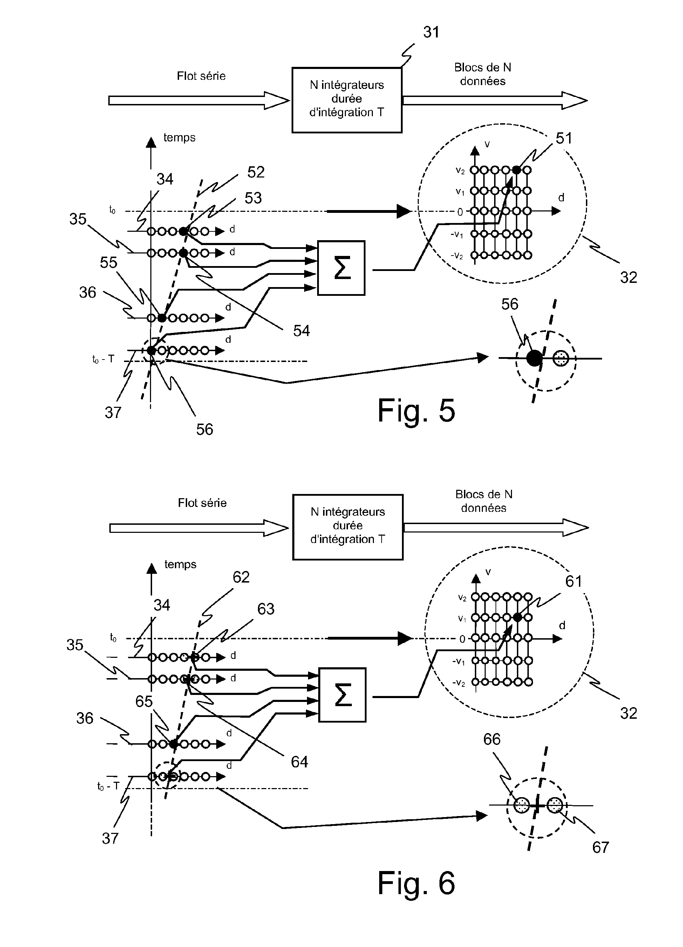

Les figures 5 à 7 illustrent de manière plus précise le principe selon lequel l'intégration est réellement réalisée par n intégrateurs élémentaires.

Il est à noter que comme cela a été dit précédemment, l'amplitude du signal intégré associée à un point de l'espace des paramètres de sortie, c'est-à-dire à un échantillon de sortie, est obtenu en considérant la trajectoire correspondante et les amplitudes du signal mesurées pour les points de l'espace des paramètres d'entrée correspondant à cette trajectoire pour les différentes séquences du signal d'entrée disponibles pendant la durée d'intégration du module intégrateur considéré. Par suite il convient de déterminer plusieurs situations.

Dans la situation la plus simple, les points considérés coïncident avec des points déterminés de l'espace des paramètres d'entrée, c'est-à-dire des points correspondant à des échantillons de signal produit par l'intégrateur précédent i-1. L'opération d'intégration consiste alors à associer les points des différentes séquences et à effectuer la somme ou la somme pondérée des amplitudes associées à ces points, c'est-à-dire des amplitudes des échantillons caractérisés par des valeurs des paramètres d'entrée correspondants à ces points.

Dans la situation générale, tout ou partie des points considérés ne coïncide pas avec des points déterminés de l'espace des paramètres d'entrée. Cette situation est causée par le fait que pour un espace de paramètres d'entrée donné, chaque paramètre est gradué, c'est-à-dire défini par valeurs discrètes selon un pas de largeur donné. Par suite, comme l'illustrent les figures 5 à 7, si la trajectoire à considérer coïncide pour une séquence m donnée avec un point de l'espace des paramètres d'entrée dont les coordonnées ne coïncident pas, pour certains paramètres, avec les graduations définies, aucun échantillon d'entrée n'est susceptible d'être caractérisé par des valeurs des paramètres d'entrée correspondant à ce point de sorte que l'amplitude associée au point correspondant n'est pas directement donnée par l'amplitude d'un des échantillons fournis. Dans ce cas il convient, pour réaliser l'opération d'intégration, d'attribuer à ce point une valeur d'amplitude calculée à partir des amplitudes des échantillons de signal d'entrée caractérisés par des valeurs de paramètres d'entrée qui définissent des points situés au voisinage du point considéré.

Les figures 5 et 6 illustrent cette situation générale, au travers d'exemples simples, pour un module intégrateur 31 réalisant l'intégration sur une durée T d'un signal monodimensionnel représenté par un paramètre statique, comme la distance d par exemple. On considère ici deux points particuliers 51 et 61 de l'espace des paramètres de sortie dont on cherche à calculer les amplitudes associées, ainsi que les trajectoires 52 et 62 correspondant à ces points, des trajectoires rectilignes ici.

La figure 5 illustre le cas où la trajectoire considérée 52, correspondant à un point donné 51 de l'espace de paramètres de sortie, coïncide sensiblement pour chaque séquence 34 à 37 avec un point 53 à 56 de l'espace des paramètres d'entrée. Dans une telle situation, l'amplitude attribuée au signal d'entrée pour déterminer l'amplitude du signal intégré au point 51 est en pratique l'amplitude associée aux points 53 à 56 de l'espace des paramètres d'entrée qui coïncide sensiblement avec la trajectoire. Par suite, dans le cas illustré par la figure 5, l'amplitude de l'échantillon de signal intégré correspondant au point 51 sera par exemple calculée en effectuant la somme ou la somme pondérée des amplitudes des points 53 à 56.

La figure 6 quant à elle illustre le cas où la trajectoire considérée 62, correspondant à un point donné 61 de l'espace de paramètres de sortie, ne coïncide réellement, pour certaines séquences, les séquences 34, 35, 36 et 37 ici, avec aucun point de l'espace des paramètres d'entrée. Dans une telle situation, l'amplitude attribuée au signal d'entrée pour déterminer l'amplitude du signal intégré au point 61 est en pratique déterminé par exemple par interpolation, à partir des amplitudes des points définis voisins, les points 66 et 67 par exemple pour la séquence 37. Par suite, dans le cas illustré par la figure 6, l'amplitude de l'échantillon de signal intégré correspondant au point 61 sera par exemple calculée en effectuant la somme ou la somme pondérée des amplitudes des points 63 à 65 et de l'amplitude calculée à partir des amplitudes des points 66 et 67.

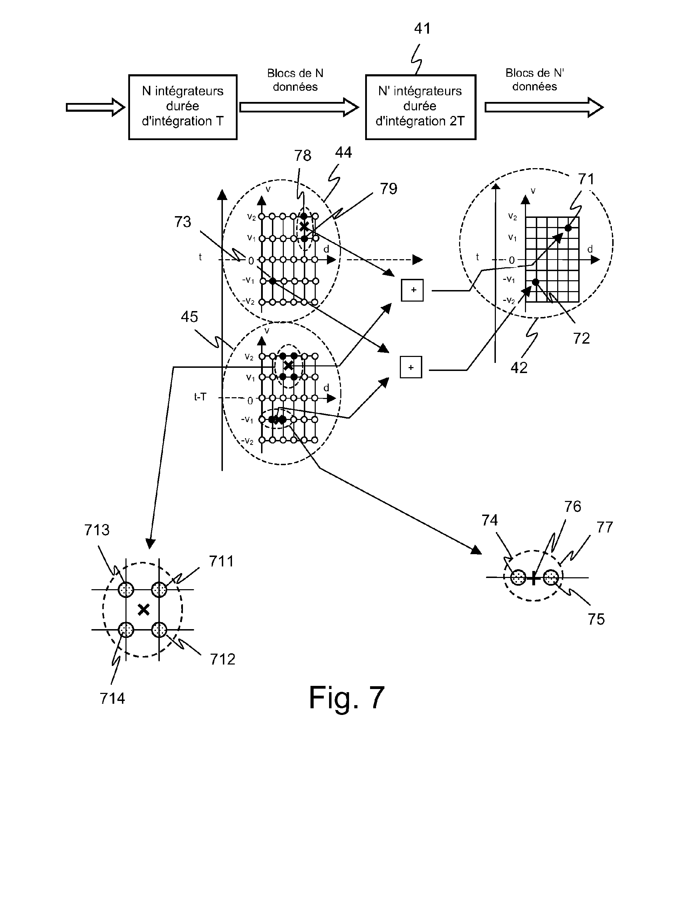

La figure 7 illustre la même situation générale, au travers d'exemples simples, pour un module intégrateur 41 réalisant l'intégration sur une durée 2T d'un signal multidimensionnel représenté ici par un paramètre statique, et un paramètre dynamique, la distance d et la vitesse radiale v par exemple. L'intégration est ici réalisée comme les cas illustrés par les figures 5 et 6.

Ainsi, lorsque la trajectoire considérée correspondant à un point donné de l'espace de paramètres de sortie, le point 72, coïncide sensiblement pour une séquence, la séquence 44 par exemple, avec un point 73 de l'espace des paramètres d'entrée, l'amplitude attribuée au signal d'entrée, pour la séquence considérée, de façon à déterminer l'amplitude du signal intégré au point considéré, le point 72 ici, est l'amplitude associée à ce point 73. En revanche lorsque cette même trajectoire ne coïncide pas réellement pour une séquence, la séquence 45 par exemple, avec un point unique de l'espace des paramètres d'entrée, l'amplitude attribuée au signal d'entrée, pour la séquence considérée, de façon à déterminer l'amplitude du signal intégré au point considéré, le point 72 ici, est déterminée à partir des amplitudes associées aux points voisins 74 et 75, par interpolation par exemple. De la même façon, l'amplitude du signal intégré au point 71 de l'espace de paramètres de sortie est par exemple déterminée par interpolation, en calculant l'amplitude du signal d'entrée pour la première séquence intégrée 44 à partir des points 78 et 79 et en calculant l'amplitude du signal d'entrée pour la seconde séquence intégrée 45 à partir des points, 711 à 714.

Comme cela a été dit précédemment et comme l'illustrent les figures 1 et 2, le procédé d'intégration selon l'invention met en oeuvre, dans sa forme générale, un ensemble de P modules intégrateurs, chaque module i réalisant une intégration du signal qui lui est transmis sur une durée $T_i$ différente de celles sur lesquelles les P-1 autres modules réalisent leurs intégrations. Un module intégrateur i réalise en outre une intégration sur une durée $T_i$, la durée $T_i$ étant égale à $k_i.T_{i-1}$, avec $k_i$ entier quelconque, positif et non nul.

Dans une forme de mise en oeuvre particulière, $k_i$ est égal à 2 pour chaque module intégrateur de sorte que les durées d'intégration des différents modules intégrateurs sont toutes multiples d'une même durée $T_0$, la durée d'intégration $T_i$ du module intégrateur i a, dans ce cas particulier, pour expression:

$$T_i = 2^{i-1} \cdot T_0$$

On dispose ainsi d'un ensemble de modules intégrateurs qui réalise des intégrations sur des profondeurs, de plus en plus importante, $T_0$, $2T_0$, $4T_0$ ... etc.

Le signal produit par un module intégrateur i donné est représenté par des séquences successives d'échantillons 14i ou 23i espacées temporellement d'un intervalle de temps égal à la durée d'intégration $T_i$, l'intégrateur 1 délivrant des séquences d'échantillons 141 ou 231 espacées dans le temps d'une durée égale à $T_0$, tandis que l'intégrateur P délivre des séquences d'échantillons 14P ou 23P espacées dans le temps d'une durée égale à $2^{P-1}T_0$.

Le nombre d'échantillons contenu dans une séquence est par ailleurs fonction du nombre de paramètres accessibles pour caractériser le signal reçu, compte tenu de l'étendue du domaine de définition de chaque paramètre et de la durée d'intégration du module i considéré.

L'ensemble des modules intégrateurs 11 ou 21 ainsi réalisé, qui constitue l'ossature du procédé selon l'invention permet avantageusement de réaliser l'intégration du signal radar traité 13 sur différentes durées d'intégration $T_i$. Cette caractéristique avantageuse permet de tirer parti de deux propriétés connues antagonistes.

Selon la première propriété, le signal produit par un intégrateur i est défini pour chaque séquence par un nombre d'échantillons $N_i$ d'autant plus important que la durée d'intégration $T_i$ est plus grande. Autrement dit, le signal intégré est défini de manière d'autant plus fine et de manière d'autant plus riche, c'est-à-dire par un nombre de paramètre $N_i$ d'autant plus important, que la durée d'intégration $T_i$ est plus grande.

En revanche, selon la seconde propriété, la cadence à laquelle les séquences d'échantillons du signal intégré sont produites par un intégrateur i est d'autant plus faible que la durée d'intégration $T_i$ est plus grande. Autrement dit plus la durée d'intégration est longue et plus la fréquence avec laquelle le signal intégré est actualisé est faible.

Ainsi, de manière générale, si l'on souhaite obtenir un signal intégré présentant une cadence de rafraichissement élevée, comme c'est le cas lorsque l'on cherche à détecter des cibles proches et évoluant à grande vitesse, on est conduit à mettre en oeuvre des modules intégrateurs présentant des durées d'intégration faibles. Inversement, si l'on souhaite obtenir un signal intégré sur une durée importante, comme c'est le cas lorsque l'on cherche à détecter des cibles lointaines et peu réflectives, on est amené à mettre en oeuvre des modules intégrateurs présentant des durées d'intégration longues. Le signal intégré produit est alors défini par un grand nombre de paramètres, chaque paramètre étant défini avec une résolution importante, et présente une cadence de rafraichissement faible, cette dernière caractéristique n'étant par ailleurs pas gênante, dans la mesure où les cibles recherchées évoluent à une distance plus grande.

Par suite la mise en oeuvre du procédé selon l'invention permet avantageusement de réaliser une intégration du signal radar reçu 13 en prenant en compte de manière simultanée différentes hypothèses sur la nature et sur la cinématique des cibles potentielles. Elle permet ainsi de réaliser en continu une veille efficace aussi bien à courte qu'à grande distance.

Comme l'illustrent les figures 1 et 2, les sorties des différents modules intégrateurs peuvent être exploitées conjointement pour réaliser la détection de cibles le plus précocement possible. A cet effet, un module de mesure 16 ainsi qu'un ensemble 15 de modules détecteurs peuvent être associés à l'ensemble de modules intégrateurs 11 ou 21 qui constitue l'ossature du procédé selon l'invention.

Dans une variante de mise en oeuvre, l'amplitude de l'échantillon considéré d'une séquence de sortie peut également être associée à un nombre indiquant combien de séquences d'entrée ont été intégrées, pendant la durée d'intégration, par l'intégrateur élémentaire considéré, sachant que, comme cela a été dit précédemment, les séquences d'échantillons du signal 13 traité par le procédé selon l'invention sont produites à des instants espacés les uns des autres d'un intervalle de temps essentiellement variable en fonction du mode de fonctionnement du radar. Ainsi un échantillon de signal intégré peut être défini comme résultant de l'intégration d'une ou plusieurs séquences. Cette information complémentaire délivrée par le module intégrateur i permet avantageusement aux modules détecteurs 15i de déterminer par calcul, ou par lecture dans une table, la valeur de seuil à appliquer à l'échantillon intégré considéré, valeur qui correspond à une probabilité donnée de fausse alarme.

Dans une telle configuration la transmission au module de mesure 16 du signal intégré 14i ou 23i produit par chacun des modules intégrateurs 12i ou 22i est généralement conditionnée au fait que l'amplitude du signal intégré considéré dépasse une valeur de seuil, fonction du nombre de séquences qui ont contribué au signal intégré 14i ou 23i, et de la probabilité de fausse alarme.

De la sorte, pour chaque module intégrateur 12i ou 22i, on vérifie en permanence, pour chaque échantillon de chaque séquence de signal produit, si l'amplitude associée à cet échantillon dépasse le seuil de détection, sachant que le seuil de détection peut être défini de manière arbitraire. Par suite, lorsque cette condition est vérifiée l'échantillon correspondant est transmis au module de mesure 16.

Chaque échantillon de signal intégré est par ailleurs défini dans le cadre de l'invention par l'amplitude associée et, dans une variante de mise en oeuvre particulière, par un nombre indiquant combien de séquences d'entrée ont été intégrées, ainsi que par les valeurs des paramètres cinématiques qui définissent la position de cet échantillon dans l'espace des paramètres de sortie, c'est-à-dire par les valeurs des paramètres (distance, gisement, site, vitesse, etc..) qui caractérisent la cinématique de cible associée à cet échantillon. Ainsi un échantillon transmis au module de mesure 16 comporte une information d'amplitude, éventuellement associée, dans la variante de mise en oeuvre particulière évoquée précédemment, à un nombre indiquant combien de séquences d'entrée ont été intégrées, et une information qui indique à quelle hypothèse de cinématique de cible (distance, position en gisement et en site, vitesse radiale, en gisement, en site, etc..) l'échantillon de signal intégré correspond.

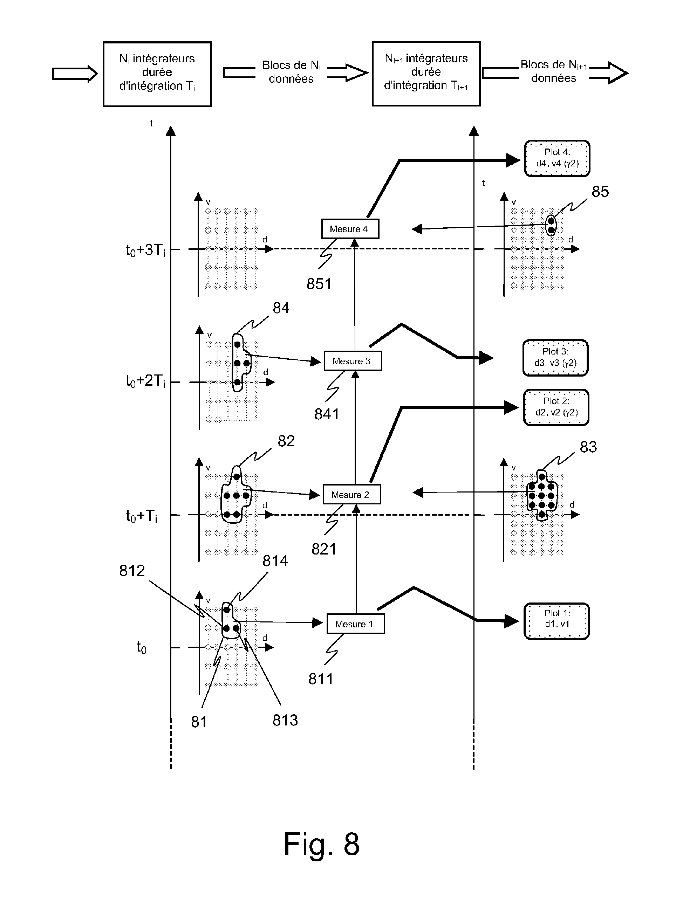

Le module de mesure 16 a pour fonction principale de former des plots, chaque plot matérialisant la détection d'une cible potentielle. En pratique un plot est formé par association d'un ensemble d'échantillons de signal produits par différents intégrateurs. La figure 8 illustre le principe de fonctionnement du module de mesure 16.

Selon l'invention, chacune des trames d'échantillons produites par un module intégrateur i quelconque comporte un ensemble d'échantillons dont l'amplitude est comparée à un seuil. Par suite, les échantillons d'une trame dont l'amplitude dépasse le seuil sont transmis au module de mesures. Celui-ci analyse les différents échantillons dont il dispose et associe certains d'entre eux pour former des plots qui sont transmis aux moyens de traitement situés en aval, des moyens de pistage par exemple, dont le rôle est d'associer les plots formés au fil du temps pour former des pistes. Chaque plot formé regroupe un ensemble d'informations qui caractérise l'objet à l'origine de ce plot, ces informations pouvant être par exemple, la position de l'objet en distance, gisement et site, ainsi que sa vitesse et son accélération.

Selon l'invention, un plot est formé à un instant t à partir des trames d'échantillons fournis, à cet instant, au module de mesure, par les différents modules intégrateurs. Pour ce faire le module de mesure 16 détermine les échantillons pouvant être considérés comme relatifs à un même objet, à une même cinématique. A ces échantillons peut être en outre associée la mesure définissant un plot formé à un instant précédent, dans le cas où cette mesure peut être considérée comme relative à ce même objet.

Dans l'exemple de la figure 8, on considère un intégrateur i dont la durée d'intégration est $T_i$ et l'intégrateur i+1 dont la durée d'intégration est $T_{i+1} = 2T_i$. L'intégrateur i produit ainsi des séquences d'échantillons intégrés successives séparées les unes des autres d'un intervalle de temps de durée $T_i$. De la même façon, l'intégrateur i+1 produit ainsi des séquences d'échantillons intégrés successives séparées les unes des autres d'un intervalle de temps de durée $2T_i$.

Pour chaque trame, représentée sur la figure, les échantillons détectés pouvant être considérés comme relatifs à un même objet sont représentés par des points noirs, encerclés par une courbe fermée dessinée en trait plein.

Selon l'invention, ces échantillons sont associés par le module de mesure 16 dès qu'ils lui sont délivrés par l'un ou l'autre des modules d'intégration. La figure 8 présente différentes formes d'associations d'échantillons et de mesures pouvant être réalisées par le module de mesure 16 selon l'invention. Les formes illustrées ici sont présentées simplement à titre d'exemples non limitatifs.

Ainsi, selon l'invention, le module de mesure 16 peut, par exemple, constituer un groupe d'échantillons 81 tirés de la trame d'échantillons délivrée au module de mesure, à un instant $t_0$, par un module i de durée d'intégration $T_i$. Le module de mesure 16 élabore alors une mesure 811 à partir de ce groupe d'échantillons 81. Cette mesure 811 est élaborée à partir des valeurs des paramètres cinématiques déduites des valeurs des mêmes paramètres correspondant aux échantillons 812 à 814 formant l'ensemble 81. Cette mesure 811 est associée à un plot.

De même, le module de mesure 16 peut par exemple constituer, pour l'instant qui suit $t_{0+}T_i$, un premier groupe 82 d'échantillons à partir des échantillons fournis par le module intégrateur i pour l'instant $t_0+T_i$ et constituer un second groupe 83 d'échantillons à partir des échantillons fournis par le module intégrateur i+1 pour l'instant $t_0+T_i$.

Par suite, dans la mesure où ces deux groupes d'échantillons 82 et 83 peuvent être considérés comme relatifs à un même objet, le module de mesure 16 associe ces deux groupes d'échantillons pour former un groupe unique. Par ailleurs si une mesure réalisée précédemment, la mesure 811 par exemple, peut être également considérée comme relative à ce même objet, le module de mesure 16 associe cette mesure 811 au groupe de plots constitué à partir de groupes 82 et 83. Cet ensemble 811, 82 et 83 est utilisé pour élaborer une mesure 821 associée à un nouveau plot transmis à la suite du traitement. Ce nouveau plot est notamment défini, comme le plot précédent, par des valeurs des paramètres cinématiques déterminées à partir des valeurs correspondantes des échantillons des groupes 82 et 83 et de la mesure 811, utilisés pour déterminer la mesure 821.

De façon analogue, le module de mesure 16 peut encore, par exemple, élaborer, pour un instant $t_0+2T_i$, une mesure 841 à partir d'un groupe d'échantillons 84 provenant d'un seul module intégrateur i et d'une mesure 821 élaborée pour l'instant précédent $t_0+T_i$. Il peut encore, pour un instant où aucune trame d'échantillons n'est transmise par le module i, l'instant $t_0+3T_i$ par exemple, élaborer une mesure 851 à partir d'un groupe d'échantillons 85 provenant du module intégrateur i+1 et d'une mesure 841 élaborée pour l'instant précédent $t_0+2T_i$.

Il est à noter que pour réaliser les différentes associations présentées précédemment, le module de mesure 16 peut mettre en oeuvre tout procédé d'association de plots connu par ailleurs, tel que ceux mis en oeuvre dans les procédés d'extraction et d'association de plots classiques dont les principes connus ne sont pas décrit ici.

Ainsi, l'association du procédé selon l'invention 11 ou 21 avec un module de mesure 16 tel que celui décrit précédemment permet avantageusement de réaliser un système capable de détecter des cibles variées et former des plots correspondant à ces cibles de manière à la fois rapide et précise. L'intégration du signal reçu par le radar sur des durées d'intégration croissantes permet simultanément:

- de réaliser de manière précoce, au moyen des intégrateurs présentant les durées d'intégration les plus faibles, la détection d'une cible présentant un fort rapport signal à bruit et de former rapidement des plots permettant de pister cette cible,
- d'assurer, au moyen des intégrateurs présentant les durées d'intégration les plus importantes, la détection de cibles véloces et/ou présentant un faible rapport signal à bruit et la formation des plots correspondants.
- de produire des mesures non seulement selon les paramètres statiques classiquement accessibles par le radar, mais aussi selon les paramètres dynamiques liés à la trajectoire de la cible, ceci dès la détection, c'est à dire avant que le pistage n'ait chaîné les plots.

Par ailleurs, les modules intégrateurs sont configurés de telle façon que l'intégration sur une période $T_i$ est réalisée de telle sorte que le module intégrateur i délivre des trames intégrées séparées les unes des autres par un intervalle de temps égal à $T_i$ (périodicité $T_i$). Cependant, dans certains cas, le signal d'entrée est bien présent sur la durée $T_i$, mais ne commence pas au début de l'un des intervalles d'intégration de durée $T_i$.

C'est pourquoi il peut être utile dans certaines applications de mettre en oeuvre une configuration différente.

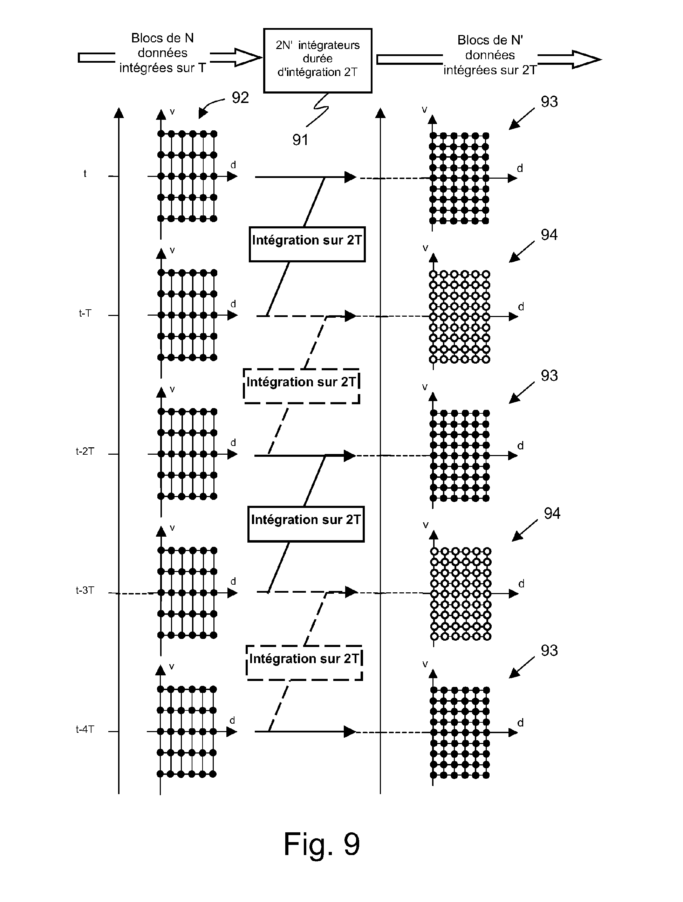

La figure 9 illustre une variante de mise en oeuvre du procédé selon l'invention qui adopte une configuration alternée. Cette configuration met en oeuvre, pour au moins une profondeur d'intégration, un module intégrateur i, 91, comportant un nombre $N'_i$ d'intégrateurs élémentaires supérieur à celui que comporte, pour chaque étape d'intégration, l'intégrateur i, 41, correspondant dans la configuration précédente illustrée par la figure 4.

Plus précisément, si un module intégrateur i, 41, de la configuration décrite précédemment, de durée d'intégration $T_i$ comporte $N_i$ intégrateurs élémentaires, le module intégrateur i correspondant, 91, de la configuration illustrée par la figure 9, de même durée d'intégration $T_i$, comporte quant à lui un nombre $N'_i$ d'intégrateurs élémentaires égal à $Q_i N_i$, où le nombre $Q_i$ est un entier naturel quelconque, non nul, préférentiellement choisi égal à 2, comme présenté sur la figure 9.

Dans une telle configuration alternée, les $N'_i$ intégrateurs élémentaires sont groupés en $Q_i$ ensembles pour effectuer les opérations d'intégrations nécessaires dans le temps disponible. Ainsi, dans l'exemple de la figure 9, $N'_i$ étant égal à $2N_i$ ($Q_i$ étant égal à 2 dans ce cas), le fonctionnement du module intégrateur 91 est assuré par deux ensembles de $N_i$ intégrateurs élémentaires chaque ensemble effectuant l'intégration deux à deux des séquences 92 fournies par le module précédent, avec un décalage d'une séquence. On obtient ainsi des séquences intégrées 93 et 94 délivrées en des instants espacés de $T_i$, les séquences 93 et 94 étant produites alternativement par l'un ou l'autre des deux ensembles d'intégrateurs élémentaires.

De manière plus générale, la configuration alternée décrite précédemment peut avantageusement être généralisée à plusieurs modules intégrateurs, voire aux P modules intégrateurs. Chaque module intégrateur i concerné, de durée d'intégration $T_i$, comporte alors $Q_i$ ensembles de $N_i$ intégrateurs élémentaires, numérotés de 1 à $Q_i$, $Q_i$ étant un nombre entier strictement positif, et produit des séquences de sortie avec une périodicité égale à $T_i/Q_i$. Dans une telle configuration, l'agencement fonctionnel des $Q_i$ ensembles d'intégrateurs élémentaires, peut être décrit comme suit:

- Le premier ensemble d'intégrateurs élémentaires réalise son intégration entre des instants $t_0$ et $t_0+T_i$ puis entre des instants $t_0+T_i$ et $t_0+2T_i$, etc..., et produit des séquences de sortie à $t_0+T_i$, $t_0+2T_i$, etc... (ceci est identique au cas de la figure 4);
- Un ensemble d'intégrateurs élémentaires intermédiaire q réalise son intégration entre les instants $t_0+(q-1)\cdot(T_i/Q_i)$ et $t_0+(q-1)\cdot(T_i/Q_i)+T_i$ puis entre les instants $t0+(q-1)\cdot(T_i/Q_i)+T_i$ et $t_0+(q-1)\cdot(T_i/Q_i)+2T_i$, etc..., et produit des séquences de sortie à $t_0+(q-1)\cdot(T_i/Q_i)+T_i$, $t_0+(q-1)(T_i/Q_i)+2T_i$, etc...;
- Le dernier ensemble d'intégrateurs élémentaires (ensemble $Q_i$), quant à lui, réalise son intégration

entre les instants $t_0+(Q_i-1)(T_i/Q_i)$ et $t_0+(Q_i-1)(T_i/Q_i)+T_i$ puis entre les instants $t_0+(Q_i-1)(T_i/Q_i)+T_i$ et $t_0+(Q_i-1)(T_i/Q_i)+2T_i$, etc..., et produit des séquences de sortie à $t_0+(Q_i-1)\cdot(T_i/Q_i)+T_i$, $t_0+(Q_i-1)\cdot(T_i/Q_i)+2T_i$, etc...

De la sorte, pour chaque durée d'intégration $T_i$, des séquences successives d'échantillons intégrés sur cette durée $T_i$ peuvent être produites avec une cadence avantageusement plus élevée, deux séquences successives étant séparées, non pas par un intervalle de temps égal à $T_i$, mais par un intervalle de temps égal à $T_i/Q_i$.

Il est à noter cependant que l'augmentation de la cadence de production des trames d'échantillons intégrés est ici obtenue en augmentant le nombre d'intégrateurs élémentaires que met en oeuvre chaque module. Cette augmentation se traduit en pratique par une augmentation de la quantité d'opérations que le module d'intégration doit effectuer dans le temps limité dont il dispose, c'est-à-dire le temps séparant la transmission par le module précédent de deux trames d'échantillons successives. C'est pourquoi il est généralement utile d'adopter une configuration intermédiaire dans laquelle, pour les profondeurs d'intégration les plus faibles, on met en oeuvre une configuration simple, telle que celle illustrée par les figures 3 et 4, et dans laquelle, pour les profondeurs d'intégration plus élevées, on met en oeuvre une configuration alternée telle que celle illustrée par la figure 9.

**Revendications**

1. Procédé d'intégration de signaux radars, les signaux intégrés étant reçus par le radar sous forme de séquences temporelles d'échantillons successives, **caractérisé en ce qu'**il met en oeuvre un ensemble de P modules intégrateurs (12i, 22i) réalisant des intégrations sur des durées différentes, chaque module intégrateur étant configuré de façon à ce que l'ensemble réalise simultanément des intégrations du signal reçu sur des durées croissantes,
chaque module intégrateur i (12i, 22i) étant configuré pour réaliser l'intégration, sur un intervalle de temps $T_i$, d'un signal (14i, 23i) représenté par des séquences m successives d'échantillons, fournies au module en des instants $t_m$, ou séquences d'entrée; chaque échantillon (73) d'une séquence d'entrée m étant **caractérisé par** des valeurs de paramètres d'entrée, des paramètres de position ou des paramètres cinématiques, valeurs qui correspondent à un modèle (d'évolution) donné d'une cible radar, et par une amplitude qui correspond à l'énergie du signal fourni au module intégrateur pour le modèle d'évolution défini, à l'instant $t_m$, par les valeurs des paramètres d'entrée caractérisant cet échantillon;
chaque module intégrateur i (41) produisant un signal intégré formé de séquences successives n (42) d'échantillons, ou séquences de sortie, chaque échantillon (72) d'une séquence de sortie n (42) étant **caractérisé par** des valeurs de paramètres cinématiques de sortie correspondant à un modèle donné (d'évolution) d'une cible radar, et par une amplitude dont la valeur est déterminée à partir de l'amplitude du signal d'entrée associée, pour chaque séquence d'entrée m (44, 45), aux valeurs des paramètres d'entrée qui correspondent, pour l'instant $t_m$ considéré, au modèle (d'évolution) de cible radar défini par les valeurs des paramètres cinématiques de sortie qui caractérisent l'échantillon de sortie considéré (72),
les valeurs d'amplitude du signal d'entrée ainsi déterminées pour chaque séquence d'entrée (44, 45) étant sommées pour déterminer l'amplitude caractérisant l'échantillon de sortie (72) considéré.

2. Procédé selon la revendication 1, **caractérisé en ce que** la somme effectuée est une somme pondérée, la valeur de la pondération appliquée étant fonction de l'instant $t_m$ considéré.

3. Procédé selon l'une des revendications 1 ou 2, **caractérisé en ce que**, chaque échantillon intégré est en outre **caractérisé par** un nombre indiquant le nombre de séquences d'entrée qui ont contribué à la détermination de son amplitude.

4. Procédé selon l'une des revendications 1 à 3, **caractérisé en ce que** l'amplitude du signal d'entrée utilisée pour calculer l'amplitude caractérisant l'échantillon de sortie (72) considéré est déterminée pour chaque séquence d'entrée (44, 45) reçue pendant l'intervalle de temps $T_i$, à partir des amplitudes d'échantillons (73, 74 et 75) de cette séquence.

5. Procédé selon l'une quelconque des revendications 1 à 4, **caractérisé en ce que** chaque module intégrateur i (12i, 22i) met en oeuvre une pluralité d'intégrateurs élémentaires, chaque intégrateur élémentaire étant configuré pour déterminer l'amplitude caractérisant un échantillon donné de chaque séquence de sortie, cet échantillon étant en outre **caractérisé par** des valeurs données des paramètres cinématiques; le nombre d'intégrateurs élémentaires constituant le module intégrateur i considéré étant fonction du nombre de valeurs que peut prendre chaque paramètre caractérisant un échantillon (72) d'une séquence de sortie (42).

6. Procédé selon l'une quelconque des revendications 1 à 5, **caractérisé en ce que**, les P modules intégrateurs étant numérotés de 1 à P, chaque module i, de durée d'intégration $T_i$, produit des séquences de sortie avec une périodicité égale à $T_i$, la durée $T_i$ étant égale à $k_i.T_{i-1}$, avec $k_i$ entier quelconque, positif et non nul.

7. Procédé selon l'une quelconque des revendications 1 à 5, **caractérisé en ce que** les P modules intégrateurs étant numérotés de 1 à P, un module intégrateur i a une durée d'intégration $T_i$ égale à $k_i T_{i-1}$, avec $k_i$ entier quelconque, positif et non nul, et comporte $Q_i$ ensembles de $N_i$ intégrateurs élémentaires, de durée d'intégration $T_i$, les séquences de sortie produites par un ensemble q d'intégrateurs élémentaires d'un module i étant produites de manière synchrone des séquences produites par le premier ensemble d'intégrateurs élémentaires du même module, avec un décalage temporel égal à $(q-1)T_i/Q_i$; chaque module intégrateur i produisant ainsi des séquences de sortie avec une périodicité égale à $T_i/Q_i$

8. Procédé selon l'une des revendications 6 ou 7, **caractérisé en ce que**, $k_i$ étant égal à 2, la durée $T_i$ est égale à $2^{i-1} T_0$

9. Procédé selon l'une quelconque des revendications précédentes, **caractérisé en ce que**, pour une séquence d'entrée m, les valeurs des paramètres d'entrée, qui correspondent, pour l'instant $t_m$ considéré, au modèle (d'évolution) de cible radar défini par les valeurs des paramètres cinématiques de sortie qui caractérisent l'échantillon de sortie considéré (72), sont sensiblement égales aux valeurs des paramètres d'entrée qui caractérisent un échantillon donné (73) de cette séquence d'entrée, la valeur de l'amplitude du signal d'entrée utilisée, pour la séquence considérée, pour déterminer l'amplitude de l'échantillon de sortie, est la valeur de l'amplitude qui caractérisent cet échantillon.

10. Procédé selon l'une quelconque des revendications 1 à 8, **caractérisé en ce que**, lorsque, pour une séquence d'entrée m, les valeurs des paramètres d'entrée, qui correspondent, pour l'instant $t_m$ considéré, au modèle (d'évolution) de cible radar défini par les valeurs des paramètres cinématiques de sortie qui caractérisent l'échantillon de sortie considéré (72), ne correspondent à aucun des échantillons de cette séquence d'entrée, la valeur de l'amplitude du signal d'entrée utilisée, pour la séquence d'entrée considérée, pour déterminer l'amplitude de l'échantillon de sortie considéré, est déterminée à partir des valeurs d'amplitude des échantillons (74, 75) **caractérisés par** des valeurs de paramètres d'entrée voisines de ces valeurs.

11. Procédé selon la revendication 10, **caractérisé en ce que**, la valeur de l'amplitude du signal d'entrée utilisée, pour la séquence d'entrée considérée, est déterminée par interpolation des valeurs d'amplitude des échantillons (74, 75) **caractérisés par** des valeurs de paramètres d'entrée voisines de ces valeurs.

12. Procédé selon l'une quelconque des revendications précédentes, **caractérisé en ce que** tous les modules intégrateurs sont mis en oeuvre en parallèle, chaque module intégrateur i effectuant l'intégration des séquences de signal radar reçu (13) disponibles pendant sa durée d'intégration $T_i$.

13. Procédé selon l'une quelconque des revendications 1 à 11, **caractérisé en ce que** les modules intégrateurs sont mis en oeuvre en cascades, chaque module i effectuant l'intégration pendant une durée $T_i$ des séquences d'échantillons produites par le module intégrateur i-1.

14. Procédé de détection d'échos radar, **caractérisé en ce que** le signal radar étant traité sous forme de séquences d'acquisition successives, il comporte:

    - une première étape d'intégration à durées d'intégration multiples durant laquelle les séquences d'échantillons de signal radar sont intégrées sur des durées croissantes conformément à différentes hypothèses de cinématiques de cibles, cette première étape produisant pour chaque durée d'intégration un signal se présentant sous la forme de séquences successives d'échantillons de signal intégré (14i, 23i), ces séquences étant produites par mise en oeuvre du procédé d'intégration (11, 21) selon l'une quelconque des revendications 1 à 12;
    - une deuxième étape de détection (15), durant laquelle on identifie, pour chacune des séquences de sortie produite par chacun des modules intégrateurs, les échantillons dont la valeur d'amplitude dépasse un seuil de détection donné, déterminé pour une probabilité de fausse alarme donnée, le seuil étant fonction du nombre de séquences d'échantillons d'entrée à partir desquelles la séquence de sortie considérée a été produite;
    - une troisième étape de mesure (16) durant laquelle les échantillons composant les diverses séquences de sortie (14i, 23i) dont les valeurs d'amplitude ont dépassé le seuil de détection correspondant sont associés pour constituer des plots.

Fig. 1

EP 2 357 488 A1

Données série

13

21

221 — $N_1$ intégrateurs durée d'intégration $T_1$

Bloc de $N_1$ données

222 — $N_2$ intégrateurs durée d'intégration $T_2$

Bloc de $N_2$ données

22P — $N_P$ intégrateurs durée d'intégration $T_P$

Bloc de $N_P$ données

15

$N_0$ détecteurs   0/1

$N_1$ détecteurs   0/1

$N_2$ détecteurs   0/1

$N_P$ détecteurs   0/1

231   232   23P

16   Mesure

Plots

Fig. 2

EP 2 357 488 A1

Fig. 3

Fig. 4

Fig. 5

Fig. 6

41

Blocs de N
données

| N intégrateurs durée d'intégration T | N' intégrateurs durée d'intégration 2T |

Blocs de N'
données

78    44
79
73
44

+

+

45

713    711

714    712

74    76    77

75

# Fig. 7

Fig. 8

Fig. 9

Europäisches
Patentamt

European
Patent Office

Office européen
des brevets

## RAPPORT DE RECHERCHE EUROPEENNE

Numéro de la demande

EP 11 15 2248

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 6 538 599 B1 (DAVID GEORGE THOMAS [US]) 25 mars 2003 (2003-03-25) * colonne 3, ligne 16 - colonne 7, ligne 35; figures 1,4-6 * ----- | 1-14 | INV. G01S7/292 |
| A | JP 57 061968 A (MITSUBISHI ELECTRIC CORP) 14 avril 1982 (1982-04-14) * abrégé; figure 3 * ----- | 1-14 | |
| A | MOHAMMADI M M ET AL: "Noncoherent integration of UWB RADAR signals using the Hough transform", 2008 5TH EUROPEAN RADAR CONFERENCE (EURAD 2008); 30-31 OCT. 2008, AMSTERDAM, NETHERLANDS, IEEE, PISCATAWAY, NJ, USA, 30 octobre 2008 (2008-10-30), pages 9-12, XP031411414, ISBN: 978-2-87487-009-5 * le document en entier * ----- | 1-14 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| Munich | 8 avril 2011 | Fanjul Caudevilla, J |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 15 2248

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-04-2011

| Document brevet cité au rapport de recherche | | Date de publication | Membre(s) de la famille de brevet(s) | | Date de publication |
|---|---|---|---|---|---|
| US 6538599 | B1 | 25-03-2003 | AU<br>WO | 2002350140 A1<br>03044558 A1 | 10-06-2003<br>30-05-2003 |
| JP 57061968 | A | 14-04-1982 | AUCUN | | |

Pour tout renseignement concernant cette annexe : voir Journal Officiel de l'Office européen des brevets, No.12/82